# EUROPEAN PATENT APPLICATION

(11) **EP 2 568 750 A1**
(43) Date of publication of application: **13.03.2013**
(21) Application number: 11777463.8
(22) Date of filing: 02.05.2011
(51) Int. Cl.: H04W 48/18, H04M 1/00, H04W 48/16, H04W 88/06

(54) **PORTABLE TERMINAL DEVICE AND METHOD**

(30) Priority: 07.05.2010 JP 2010107334
(71) Applicant: NTT DOCOMO, INC., Chiyoda-ku Tokyo 100-6150 (JP)
(72) Inventor: ITO, Makoto, Tokyo 100-6150 (JP); YUNOKI, Kazufumi, Tokyo 100-6150 (JP); IDA, Takehiro, Tokyo 100-6150 (JP)
(74) Representative: Maury, Richard Philip
(86) International application number: PCT/JP2011/060527
(87) International publication number: WO 2011/138944

(57) **Abstract**

There are included an information collecting unit that collects, for each of public land mobile network, public land mobile network selecting information to be used for selecting a public land mobile network to be preferentially selected, and a storing unit that stores, for each of the public land mobile networks, the public land mobile network selecting information collected by the information collecting unit.

## Description

### TECHNICAL FIELD

The present invention relates to a mobile station.

### BACKGROUND ART

There are some mobile terminal devices which may be used in a country other than a contracted country. In a case where a mobile terminal device is allowed to be used in a country other than the contracted country, it is possible that a roaming agreement has been concluded between an operator in the contracted country and another operator in the country other than the contracted country. Radio communication systems provided by an operator may include a GSM (Global System for Mobile Communications) system and a WCDMA (Wideband Code Division Multiple Access) system. Further, an LTE (Long Term Evolution) system may be included.

A mobile station operates on its home public land mobile network (PLMN: public land mobile network) or equivalent home PLMN. The mobile station selects a PLMN. Two types of selection methods, i.e., an automatic mode and a manual mode, are defined as operations for selecting the PLMN. In the automatic mode, a list of PLMNs in priority order is utilized. The highest priority PLMN among available and allowable PLMNs is selected. In the manual mode, the mobile station indicates available PLMNs to a user. Only when the user manually selects, the mobile station tries to obtain a service in the selected PLMN.

A case will be explained in which a PLMN is selected in the automatic mode.

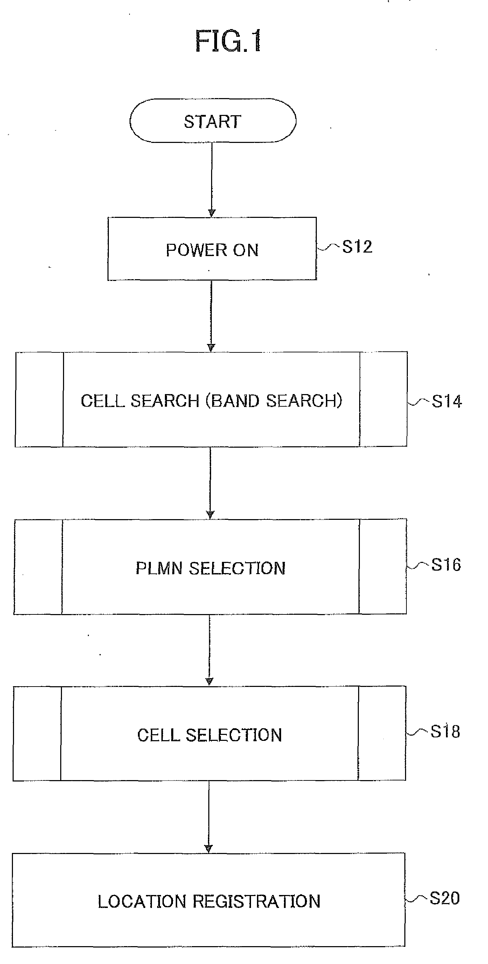

FIG. 1 shows an example of processes from the power-on of a mobile station until the location registration is performed.

The power source of the mobile station is turned on (step S12).

The mobile station performs a cell search (step S14). The mobile station detects available frequency ranges and cells that are to be candidates for a serving cell. The cell search may be referred to as a band search.

The mobile station performs PLMN selection (step S16). The mobile station selects a PLMN that is available for the mobile station among the cells that have been detected at step S14. For example, a USIM (Universal Subscriber Identity Module) card is attached to the mobile station. The USIM stores a telephone number for which a contract has been concluded with an operator; and a priority order to be recorded by the operator, which is for establishing a connection with another operator's PLMN. When a PLMN is to be selected in accordance with the priority order, for PLMNs having the same priority order, the mobile station selects the PLMN randomly from the PLMNs whose electric field strengths are greater than or equal to a predefined value. Further, when there are no PLMNs whose electric field strengths are greater than or equal to the predefined value, the mobile station selects the PLMN in accordance with a descending order of signal levels.

The mobile station performs cell selection (step S18). The mobile station detects candidate cells which are available to the mobile station, based on broadcast information from the PLMN which has been selected at step S16.

The mobile station performs location registration (step S20). The mobile station selects a cell to which the location registration is to be performed among the cells detected at step S18. Then the mobile station performs the location registration with the cell.

### RELATED ART DOCUMENT

### [NON-PATENT DOCUMENT]

Non-Patent Document 1: 3GPP TS23.122 V9.2.0, 2010 03

### SUMMARY OF THE INVENTION

### PROBLEM TO BE SOLVED BY THE INVENTION

The 3GPP standard defines a process for selecting a PLMN where a mobile station is to be served in a contracted country.

However, a process is not defined for the mobile station to select a PLMN in a country other than the contracted country. For example, the mobile station randomly selects a PLMN.

When the PLMN to be connected to is randomly selected and the PLMN serves, it is not always true that the communication quality in the PLMN is good.

It is preferable that, in the country other than the contracted country, the mobile station can be connected to a PLMN of good communication quality, similar to the case of the contracted country.

The present invention has been achieved in view of the above-described problem. An objective of the present invention is to provide a mobile station and a method with which information for establishing a connection to a network of good communication quality can be collected in a country other than a contracted country.

### MEANS FOR SOLVING THE PROBLEM

The mobile station includes
an information collecting unit that collects, for each of public land mobile networks, public land mobile network selecting information to be used for selecting a first public land mobile network to be preferentially selected; and
a storing unit that stores, for each of the public land mobile networks, the public land mobile network selecting information collected by the information collecting unit.

The method includes
an information collection step of collecting, for each of public land mobile networks, public land mobile network selecting information to be used for selecting a first public land mobile network to be preferentially selected; and
a storing step of storing, for each of the public land mobile networks, the public land mobile network selecting information collected by the information collecting unit.

### EFFECT OF THE PRESENT INVENTION

With the disclosed mobile station and the method, the information for establishing the connection to the network of good communication quality can be collected in the country other than the contracted country.

### BRIEF DESCRIPTION OF THE DRAWINGS

FIG. 1 is a flowchart showing an example of processes until location registration;
FIG. 2 is a diagram illustrating an example of a system where a mobile station according to an embodiment is adopted;
FIG. 3 is a configuration diagram showing an example of hardware representing the mobile station according to the embodiment;
FIG. 4 is a functional block diagram showing the mobile station according to the embodiment;
FIG. 5 is a diagram illustrating information (version 1) stored in the mobile station according to the embodiment;
FIG. 6 is a diagram illustrating information (version 2) stored in the mobile station according to the embodiment;
FIG. 7 is a diagram illustrating information (version 3) stored in the mobile station according to the embodiment;
FIG. 8 is a diagram illustrating information (version 4) stored in the mobile station according to the embodiment;
FIG. 9 is a diagram illustrating information (version 5) stored in the mobile station according to the embodiment;
FIG. 10 is a flowchart (version 1) showing an example of operations of the mobile station according to the embodiment;
FIG. 11 is a flowchart (version 2) showing the example of the operations of the mobile station according to the embodiment;
FIG. 12 is a flowchart (version 3) showing an example of operations of the mobile station according to the embodiment;
FIG. 13 is a flowchart (version 4) showing the example of the operations of the mobile station according to the embodiment; and
FIG. 14 is a diagram illustrating an example of timing of switching a public land mobile network for the mobile station according to the embodiment.

### EMBODIMENTS FOR CARRYING OUT THE INVENTION

Hereinafter, there will be explained a configuration for implementing the present invention based on the following embodiment, while referring to the figures. Here, in all the figures for explaining the embodiment, repeated explanations are omitted by using the same reference numerals for elements having the same functions.

### <Embodiment>

### <System>

There will be explained a system for which a mobile station 100 according to the embodiment is adopted.

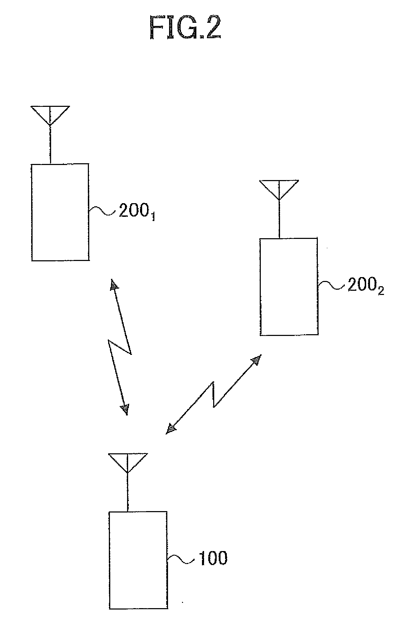

FIG. 2 shows an example of the system for which the mobile station 100 is adopted.

The system includes the mobile station 100. The system includes base stations 200ₘ (m is an integer such that m>0). FIG. 2 shows, as an example, a case where m = 2. Each telecommunications carrier among at least two telecommunication carriers (hereinafter, referred to as "operators") operates some of the plural base stations 200ₘ. For example, the base station 200₁ and the base station 200₂ are operated by different operators. For example, mobile country codes (MCC: Mobile Country Code) are the same for the at least two operators that operate PLMNs to which the corresponding base stations 200ₘ belong, but mobile network codes (MNC: Mobile Network Code) are different.

The mobile station 100 collects information regarding communication quality for each of the operators which are operating in the country in which the mobile station 100 is being served. The mobile station 100 sets the network of the operator of good quality to be a PLMN to be preferentially connected, based on the information.

In the following, there are some cases where the "network" and the "PLMN" are used as synonyms.

### <Mobile station>

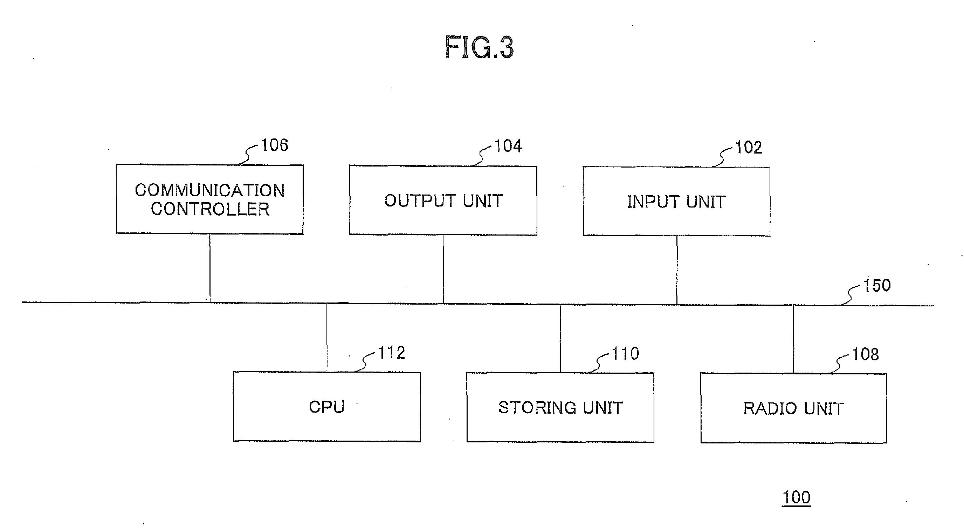

FIG. 3 shows the mobile station 100 according to the embodiment. FIG. 3 mainly shows a hardware configuration.

The mobile station 100 includes an input unit 102; an output unit 104; a communication controller 106; a radio unit 108; a storing unit 110; and a central processing unit 112. The functional blocks are connected by a bus 150. In the embodiment, the mobile station 100 is explained as an example. However, the configuration may be applied not only to the mobile station 100, but also to a terminal device, as long as the terminal device is capable of international roaming. For example, the configuration can be applied to a personal digital assistant (PDA: Personal Digital Assistant).

The central processing unit 112 performs control of the input unit 102, the output unit 104, the communication controller 106, the radio unit 108, and the storing unit 110. The central processing unit 112 operates in accordance with a program stored in the storing unit 110, and performs predetermined processes.

The storing unit 110 stores an application and an operating system (OS: Operating System). The application is software that includes a function to execute tasks that are performed by a user through the mobile station 100. The operating system is software that provides, in the mobile station 100, application software with an interface that abstracts hardware.

The input unit 102 includes a keyboard and a mouse, for example. The input unit 102 is a device for inputting an instruction to the mobile station 100 and data. Additionally, the input unit 102 includes a microphone, for example. The input unit 102 inputs a voice from a user. The voice may include an instruction to the mobile station 100. The instruction includes an instruction to the operating system and an instruction to the application.

The output unit 104 includes a display, for example. The output unit 104 indicates a processing state of the mobile station 100 and a processing result by the mobile station 100. Further, the output unit 104 may include a speaker, for example, and the output unit 104 may output a sound to a user. The processing state and the processing result include those by the operating system and the application. The display includes a liquid crystal display (Liquid Crystal Display: LCD), a CRT (Cathode Ray Tube) display, a plasma display (PDP: Plasma Display Panel), and an organic electroluminescence (Electro-Luminescence) display, for example.

The communication controller 106 generates control information for connecting the mobile station 100 to a network to be connected. The communication controller 106 also analyzes control information transmitted from a base station to be connected. Further, the communication controller 106 performs a frequency range measurement based on a signal to be received by the radio unit 108. The frequency range measurement may be referred to as a frequency range search (retrieval), or a cell search.

The radio unit 108 performs radio communication based on a predetermined radio communication scheme with the base station 200ₘ in accordance with the control of the central processing unit 112. The radio communication scheme includes the GSM scheme and the W-CDMA scheme. Further, the LTE scheme may be included. For example, the radio unit 108 converts the control information generated by the communication controller 106 into a radio signal and transmits it. Further, the radio unit 108 converts a radio signal from the base station 200ₘ into a baseband signal.

### <Functions of the mobile station>

Processes performed by the mobile station 100 include a process of determining whether a mobile country code stored in a card that is inserted into (attached to) the mobile station 100 is identical to a mobile country code included in a broadcast channel received by the mobile station 100. The card is an IC card in which subscriber information is recorded. It may be a USIM. In the following, as an example, a case is shown where a USIM card is inserted. The card may be referred to by a name other than the USIM.

Further, the processes performed by the mobile station 100 include a process of collecting, for each of operators, information to be used for selecting a PLMN to be preferentially selected (hereinafter, referred to as priority PLMN selecting information), when the mobile country code stored in the USIM card inserted into the mobile station 100 is not identical to the mobile country code included in the broadcast channel. The collected priority PLMN selecting information is stored in the storing unit. All the information regarding the operators in plural countries visited by the user may be accumulated. The priority PLMN selecting information may be stored for each of the countries. For the case where the information is stored for each of the countries, the priority PLMN selecting information is newly collected for the corresponding operators, when the mobile country code stored in the USIM card that is inserted into the mobile station 100 is not identical to the mobile country code included in the broadcast channel. The priority PLMN selecting information includes the number of times that the coverage is lost. It may include the number of times that the coverage is lost within a predetermined time interval. Further, the priority PLMN selecting information includes the number of times of disconnection. It may include the number of times of disconnection within a predetermined time interval. Further, the priority PLMN selecting information includes the number of times of reconnection. It may include the number of times of reconnection within a predetermined time interval. Further, the priority PLMN selecting information includes a throughput. Further, the priority PLMN selecting information includes the number of times of selecting the operators, which have been selected by a user by operating the mobile station 100. The information is not limited to the above example, provided that the information can be used for selecting a PLMN to be preferentially selected.

Further, the processes performed by the mobile station 100 include a process of selecting the operator to be preferentially connected, based on the priority PLMN selecting information, when the mobile country code stored in the USIM card inserted into the mobile station 100 is not identical to the mobile country code included in the broadcast channel. Further, the processes performed by the mobile station 100 include a process of selecting an operator to be connected. When the operator to be connected is to be selected, the operator may be selected among operators which include the operator that has been selected based on the priority PLMN selecting information.

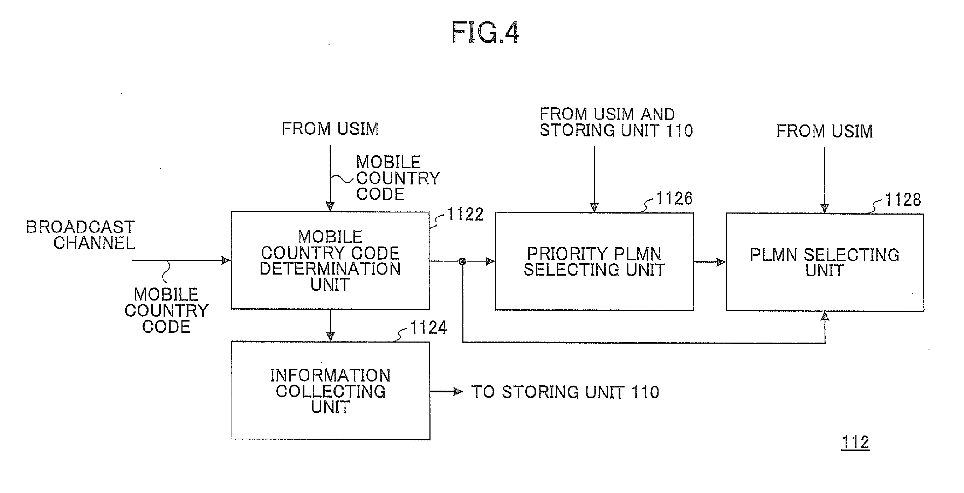

FIG. 4 is a functional block diagram showing functions of the mobile station 100. FIG. 4 mainly shows the functions executed by the central processing unit 112.

The mobile station 100 includes a mobile country code determination unit 1122. The mobile country code stored in the USIM card inserted into the mobile terminal 100 is input to the mobile country code determination unit 1122- Further, the mobile country code included in the broadcast channel received by the mobile station 100 is input to the mobile country code determination unit 1122. The mobile country code may be the mobile country code included in a master information block (MIB: Master Information Block) of the broadcast channel. The mobile country code determination unit 1122 determines whether the mobile country code stored in the USIM card is identical to the mobile country code included in the broadcast channel. When the mobile country code determination unit 1122 determines that the mobile country code stored in the USIM card is identical to the mobile country code included in the broadcast channel, the mobile country code determination unit 1122 reports to a PLMN selecting unit 1128 that the mobile country codes are identical.

On the other hand, when the mobile country code determination unit 1122 determines that the mobile country code stored in the USIM card is not identical to the mobile country code included in the broadcast channel, the mobile country code determination unit 1122 reports to the priority PLMN selecting unit 1126 that the mobile country codes are not identical. Along with the reporting, the mobile country code determination unit 1122 instructs an information collecting unit 1124 to collect the priority PLMN selecting information. When the information collecting unit 1124 is instructed to collect the priority PLMN selecting information, it may be determined whether the priority PLMN selecting information is stored in the storing unit 110. When it is determined that the priority PLMN selecting information is not stored in the storing unit 110 based on the result of the determination, the information collecting unit 1124 may be instructed to collect the priority PLMN selecting information. Further, even if the priority PLMN selecting information is stored in the storing unit 110, when the priority PLMN selecting information is old, the information collecting unit 1124 may be instructed to collect the priority land mobile network selecting information.

Further, the priority PLMN selecting information may be collected for each of the mobile country codes. The mobile country code determination unit 1122 may instruct the information collecting unit 1124 to collect the priority PLMN selecting information corresponding to the mobile country code included in the broadcast information. When the information collecting unit 1124 is instructed to collect the priority PLMN selecting information, it may be determined whether the priority PLMN selecting information corresponding to the country code included in the broadcast information is stored in the storing unit 110. When it is determined that the priority PLMN selecting information corresponding to the mobile country code included in the broadcast information is not stored in the storing unit 110 based on the result of the determination, the information collecting unit 1124 may be instructed to collect the priority PLMN selecting information corresponding to the mobile country code included in the broadcast information. Further, even if the priority PLMN selecting information corresponding to the mobile country code included in the broadcast information is stored in the storing unit 110, when the priority PLMN selecting information is old, the information collecting unit 1124 may be instructed to collect the priority PLMN selecting information.

The mobile station 100 includes the information collecting unit 1124. The information collecting unit 1124 is connected to the mobile country code determination unit 1122. The information collecting unit 1124 collects the priority PLMN selecting information in accordance with the instruction from the mobile country code determination unit 1122. The priority PLMN selecting information may be collected for each of the mobile country codes.

### <Collection of the priority PLMN selecting information (version 1)>

The information collecting unit 1124 collects the number of times that the coverage is lost, as the priority PLMN selecting information. The number of times that the coverage is lost within a predetermined time interval may be collected. For example, the information collecting unit 1124 causes the communication controller 106 to perform a frequency range measurement, and determines presence or absence of a serving operator based on the result of the frequency range measurement. When there exists a serving operator, it is continuously observed whether the operator is serving. For example, the frequency range measurement may be performed at predetermined timings. The predetermined timings may be regular or irregular. The information collecting unit 1124 collects, for each of the operators, the number of times that the coverage is lost within a predetermined time interval. It may be collected for each of the PLMNs. The information collecting unit 1124 stores the number of times that the coverage is lost, which is collected for each of the operators, in the storing unit 110. When only the number of times is used, an operator that has actually not been selected gains advantage. Therefore, a MTBF (Mean Time Between Failure) or a MTTR (Mean Time to Repair) may be utilized.

### <Collection of the priority PLMN selecting information (version 2)>

The information collecting unit 1124 collects the number of times of disconnection as the priority PLMN selecting information. The number of times of disconnection may be collected within a predetermined time interval. For example, the information collecting unit 1124 causes the communication controller 106 to generate, for each of the operators, control information for establishing a connection with the operator. The communication controller 106 causes the radio unit 108 to wirelessly transmit the control information. Further, the information collecting unit 1124 causes the communication controller 106 to analyze control information received from the base station, which has transmitted the control information. The information collecting unit 1124 determines whether the radio communication between the mobile station 100 and the base station 200ₘ is disconnected. The information collecting unit 1124 counts, for each of the operators, the number of times of disconnection within a predetermined interval. For example, the process of counting the number of times of disconnection may be performed at predetermined timings. The predetermined timings may be regular or irregular. The information collecting unit 1124 collects, for each of the operators, the number of times of disconnection during the predetermined time interval. It may be collected for each of the PLMNs. The information collecting unit 1124 stores the number of times of disconnection, which has been collected for each of the operators, in the storing unit 110. When only the number of times is used, the operator that has actually not been selected gains advantage. Therefore, the MTBF (Mean Time Between Failure) or the MTTR (Mean Time to Repair) may be utilized.

### <Collection of the priority PLMN selecting information (version 3)>

The information collecting unit 1124 collects the number of times of reconnection during a predetermined time interval, as the priority PLMN selecting information. For example, the information collecting unit 1124 counts the number of times of reconnection that is caused by disconnection of radio communication in the corresponding state where the radio communication have been performed between the mobile station 100 and the base station 200ₘ. The number of times of reconnection means the number of times that the reconnection was successful. It is different from a disconnection in a case of a failure as a result of a reconnection process. The information collecting unit 1124 counts, for each of the operators, the number of times of reconnection during the predetermined time interval. For example, the process of counting the number of times of reconnection may be performed at predetermined timings. The predetermined timings may be regular or irregular. The information collecting unit 1124 collects, for each of the operators, the number of times of reconnection during the predetermined time interval. It may be collected for each of the PLMNs. The information collecting unit 1124 stores the number of times of reconnection, which is collected for each of the operators, in the storing unit 110. When only the number of times is used, the operator that has actually not been selected gains advantage. Therefore, the MTBF (Mean Time Between Failure) or the MTTR (Mean Time to Repair) may be utilized.

### <Collection of the priority PLMN selecting information (version 4)>

The information collecting unit 1124 collects throughputs as the priority PLMN selecting information. For example, the information collecting unit 1124 collects the throughputs in a state where radio communication has been performed between the mobile station 100 and the base station 200ₘ. The information collecting unit 1124 measures a throughput for each of the operators. For example, the process of measuring the throughput may be performed at predetermined timings. The predetermined timings may be regular or irregular. The information collecting unit 1124 collects the throughput for each of the operators. It may be collected for each of the PLMNs. The information collecting unit 1124 stores the throughput, which has been collected for each of the operators, in the storing unit 110.

### <Collection of the priority PLMN selecting information (version 5)>

The information collecting unit 1124 collects the number of times of selection as the priority PLMN selecting information. For example, the information collecting unit 1124 may collect the information regarding an operator which has been selected by the user through operating the mobile station 100. It may be collected when the manual mode has been set. The information collecting unit 1124 counts, for each of the operators, the number of times of selection. The information collecting unit 1124 stores the number of times of selection for each of the operators.

The mobile station 100 includes the priority PLMN selecting unit 1126. The priority PLMN selecting unit 1126 is connected to the mobile country code determination unit 1122. When the mobile country code determination unit 1122 reports to the priority PLMN selecting unit 1126 that the mobile country codes are different, the priority PLMN selecting unit 1126 selects a public land mobile network to be preferentially selected (hereinafter, referred to as "first priority PLMN") based on network information stored in the USIM. The network information stored in the USIM may include information regarding the subscribed operator's network, information regarding a network that has been set by a user as a network to be preferentially selected, and information regarding a network that has been set by the operator as a network to be preferentially selected. For a case where the network, whose information has been stored in the USIM, does not coincide with the networks that have been detected by a cell search, the priority PLMN selecting unit 1126 selects a public land mobile network to be preferentially selected (hereinafter, referred to as "second priority PLMN") based on the priority PLMN selecting information stored in the storing unit 110. For a case where the USIM does not store any information regarding networks, the priority PLMN selecting unit 1126 selects a public land mobile network to be preferentially selected, based on the second priority PLMN selecting information. The priority PLMN selecting unit 1126 reports to the PLMN selecting unit 1128 that the mobile country codes are different. Further, the priority PLMN selecting unit 1126 sequentially reports the first and/or second priority PLMN to the PLMN selecting unit 1128, depending on necessity. For example, it sequentially reports until cell selection is performed.

The mobile station 100 includes the PLMN selecting unit 1128. When the mobile country code determination unit 1122 reports to the PLMN selecting unit 1128 that the mobile country codes are identical, the PLMN selecting unit 1128 selects a public land mobile network to be preferentially selected, based on the network information stored in the USIM. When the network, whose information has been stored in the USIM, does not coincide with the network detected by a cell search, the PLMN selecting unit 1128 selects a network based on the electric field strength.

On the other hand, when the priority PLMN selecting unit 1126 reports to the PLMN selecting unit 1128 that the mobile country codes are different, the PLMN selecting unit 1128 selects a public land mobile network in accordance with the first priority PLMN to be input by the priority PLMN selecting unit 1126. For example, a public land mobile network to be preferentially selected may be selected in the order of the subscribed operator's network, a network to be preferentially selected by the user, and a network to be preferentially selected by the operator, whose information has been stored in the USIM. In this case, a network whose information is not stored in the USIM is ignored. When the network, whose information has been stored in the USIM, does not coincide with the network detected by the cell search, the PLMN selecting unit 1128 selects a public land mobile network to be preferentially selected based on the second priority PLMN from the priority PLMN selecting unit 1126.

### <PLMN selection process (version 1)>

The storing unit 110 stores numbers of times that the coverage is lost during a predetermined time interval for the corresponding operators of the PLMNs, as the priority PLMN selecting information.

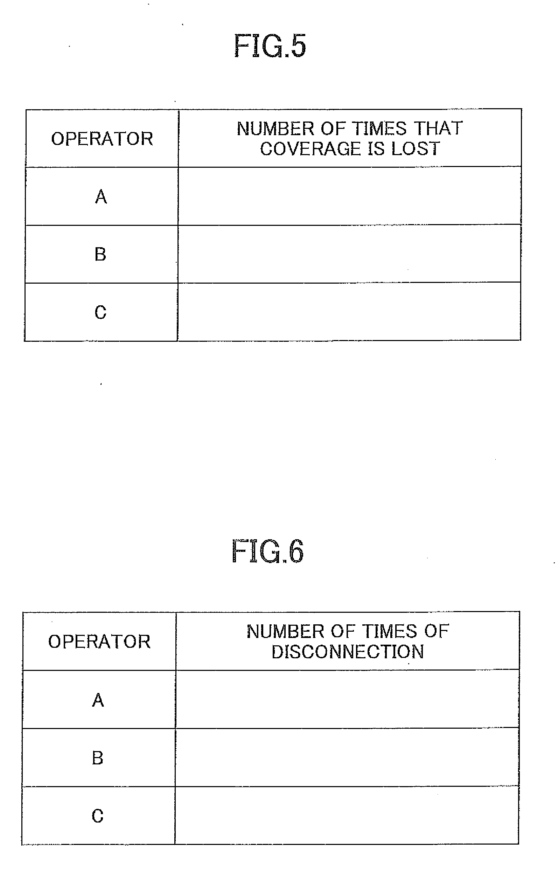

FIG. 5 shows an example of the numbers of times that the coverage is lost, which are to be stored in the storing unit 110 for the corresponding operators of the PLMNs. FIG. 5 shows a case where there are three operators. They may be stored for the corresponding PLMNs. The number of the operators is in accordance with the number of the networks which are operated in a country other than the contracted country. It may be two, or may be more than or equal to four. All the information regarding the operators in plural countries visited by the user may be accumulated. The priority PLMN selecting unit 1126 selects an operator, which has a small number of times that the coverage is lost, as a network to be preferentially connected. For example, the operators are set to be the networks to be preferentially connected, in ascending order of the number of times that the coverage is lost.

### <PLMN selection process (version 2)>

The storing unit 110 stores numbers of times of disconnection within a predetermined time interval for the corresponding operators of the PLMNs, as the priority PLMN selecting information.

FIG. 6 shows an example of the numbers of times of disconnection to be stored in the storing unit 110 for the corresponding operators. FIG. 6 shows a case where there are three operators. They may be stored for the corresponding PLMNs. The number of the operators is in accordance with the number of the networks which are operated in a country other than the contracted country- It may be two, or may be more than or equal to four. The priority PLMN selecting unit 1126 selects an operator, which has a small number of times of disconnection, as a network to be preferentially connected. For example, the operators are set to be the networks to be preferentially connected, in ascending order of the number of times of disconnection.

### <PLMN selection process (version 3)>

The storing unit 110 stores numbers of times of reconnection within a predetermined time interval for the corresponding operators of the PLMNs, as the priority PLMN selecting information.

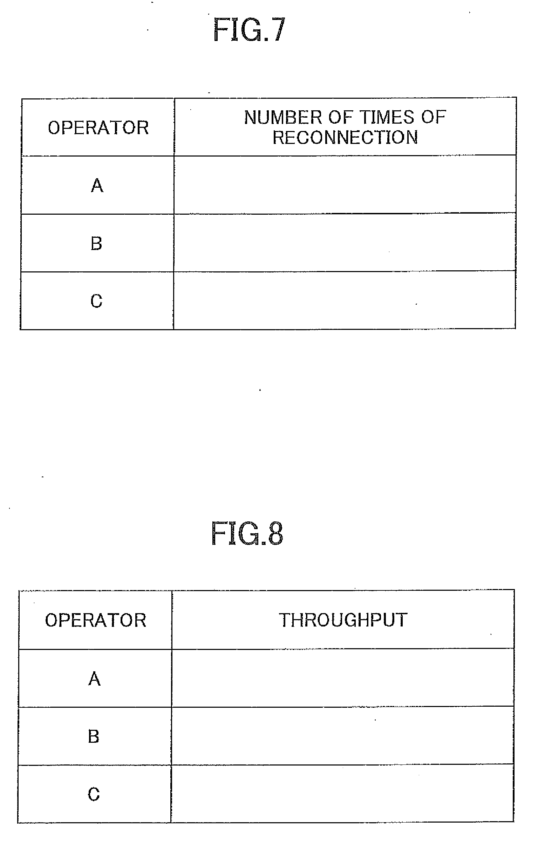

FIG. 7 shows an example of the numbers of times of reconnection to be stored in the storing unit 110 for the corresponding operators. They may be stored for the corresponding PLMNs. FIG- 7 shows a case where there are three operators. The number of the operators is in accordance with the number of the networks which are operated in a country other than the contracted country. It may be two, or may be more than or equal to four. The priority PLMN selecting unit 1126 selects an operator, which has a small number of times of reconnection, as a network to be preferentially connected. For example, the operators are set to be the networks to be preferentially connected in ascending order of the number of times of reconnection.

### <PLMN selection process (version 4)>

The storing unit 110 stores the throughputs for the corresponding operators of the PLMNs.

FIG. 8 shows an example of the throughputs to be stored in the storing unit 110, which are measured for the corresponding operators. It may be stored for the corresponding PLMNs. FIG. 8 shows a case where there are three operators. The number of the operators is in accordance with the number of the networks which are operated in a country other than the contracted country. It may be two, or may be more than or equal to four. The priority PLMN selecting unit 1126 selects an operator, which has a high throughput, as a network to be preferentially connected. For example, the operators are set to be the networks to be preferentially connected in a descending order of the throughput.

### <PLMN selection process (version 5)>

The storing unit 110 stores numbers of times of selecting the corresponding operators of the PLMNs, as the priority PLMN selecting information.

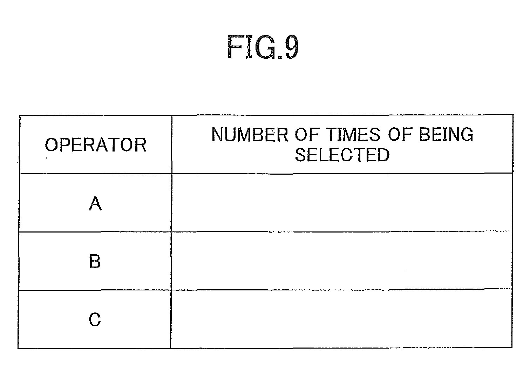

FIG. 9 shows an example of the numbers of times of selection to be stored in the storing unit 110 for the corresponding operators. They may be stored for the corresponding PLMNs. FIG. 9 shows a case where there are three operators. The number of the operators is in accordance with the number of the networks which are operated in a country other than the contracted country. It may be two, or may be more than or equal to four. The priority PLMN selecting unit 1126 selects an operator, which has a large number of times of selection, as a network to be preferentially connected. For example, operators are set to be the networks to be preferentially connected in a descending order of the throughput.

### <Operations of the mobile station>

### <Operations of a case where a power supply is turned on>

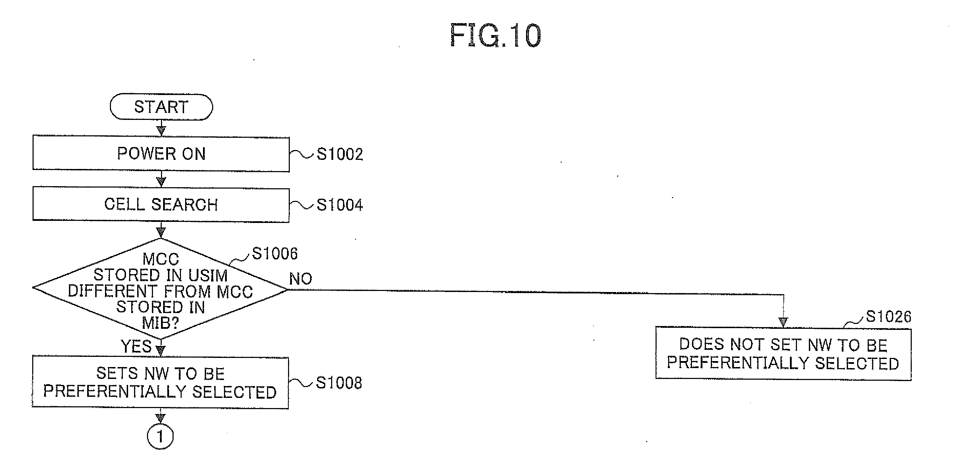

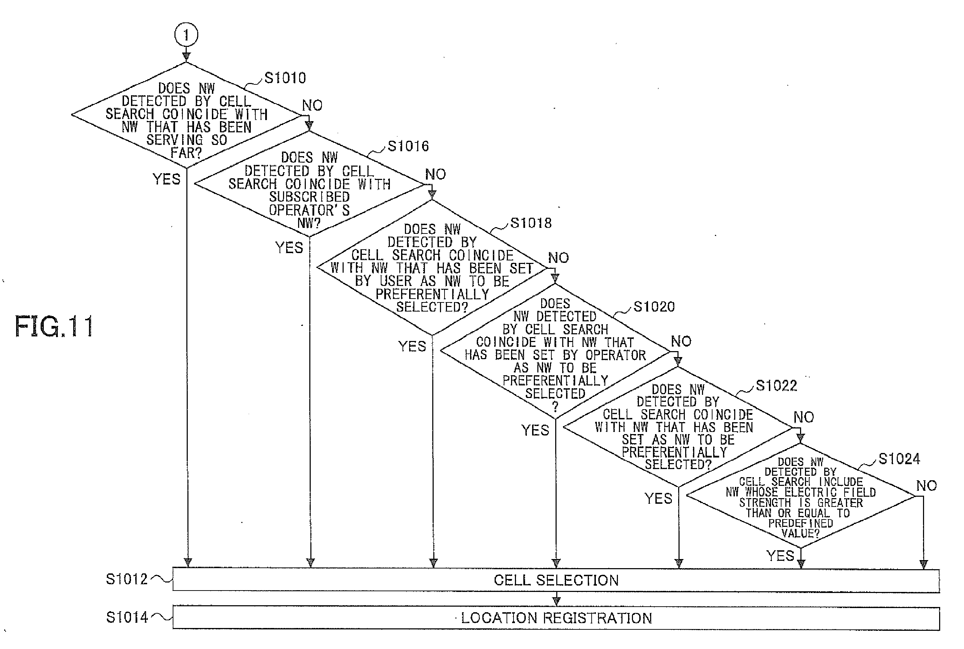

FIGS. 10 and 11 show a flowchart of an example of operations of the mobile station 100. FIGS. 10 and 11 show a location registration flow for a case where a power supply is turned on.

The power supply of the mobile station 100 is turned on (step S1002).

The mobile station 100 performs a cell search (step S1004).

The mobile station 100 determines whether a mobile country code stored in the USIM card inserted into the mobile station 100 is identical to a mobile country code included in the broadcast channel (step S1006). For example, the mobile country code determination unit 1122 determines whether the mobile country code stored in the USIM card inserted into the mobile station 100 is identical to the mobile country code included in the broadcast channel.

When it is determined that the mobile country code stored in the USIM card is not identical to the mobile country code included in the broadcast channel (step S1006: YES), the mobile station 100 selects the second priority PLMN as the network to be preferentially selected (step S1008). For example, the priority PLMN selecting unit 1126 selects a public land mobile network to be preferentially selected. The public land mobile network to be preferentially selected is set to be the second priority PLMN.

The mobile station 100 determines whether the public land mobile network that has been detected by the cell search at step S1004 coincides with the network that has served so far (step S1010). For example, the PLMN selecting unit 1128 determines whether the public land mobile network that has been detected by the cell search coincides with the network that has served so far.

When it is determined that the network corresponding to the public land mobile network that has been detected by the cell search coincides with the network that has been serving so far (step S1010: YES), the mobile station 100 selects the public land mobile network corresponding to the serving network. For example, when the PLMN selecting unit 1128 determines that the network corresponding to the public land mobile network detected by the cell search coincides with the network that has been serving so far, the PLMN selecting unit 1128 selects the public land mobile network corresponding to the serving network.

The mobile station 100 selects a cell of the public land mobile network selected at step S1010 (step S1012). For example, the mobile station 100 detects a candidate of an available cell from the broadcast information of the public land mobile network that has been selected at step S1010.

The mobile station 100 performs location registration (step S1014) by using the cell detected at step S1012.

On the other hand, when it is determined that the public land mobile network that has been detected by the cell search does not coincide with the network that has been serving so far (step S1010: NO), the mobile station 100 determines whether the public land mobile network that has been detected by the cell search at step S1004 coincides with the subscribed operator's network (step S1016). For example, the PLMN selecting unit 1128 determines whether the network corresponding to the public land mobile network that has been detected by the cell search coincides with the subscribed operator's network.

When it is determined that the network corresponding to the public land mobile network detected by the cell search coincides with the subscribed operator's network (step S1016: YES), the mobile station 100 selects the public land mobile network corresponding to the subscribed operator's network. For example, when the PLMN selecting unit 1128 determines that the network corresponding to the public land mobile network detected by the cell search coincides with the subscribed operator's network, the PLMN selecting unit 1128 selects the public land mobile network corresponding to the subscribed operator's network.

The mobile station 100 selects a cell of the public land mobile network selected at step S1016 (step S1012). For example, the mobile station 100 detects a candidate of an available cell from the broadcast information of the public land mobile network that has been selected at step S1016.

The mobile station 100 performs location registration (step S1014) by using the cell detected at step S1012.

On the other hand, when it is determined that the public land mobile network that has been detected by the cell search does not coincide with the subscribed operator's network (step S1016: NO), the mobile station 100 determines whether the network corresponding to the public land mobile network that has been detected by the cell search at step S1004 coincides with the network that has been set by the user as the network to be preferentially selected (step S1018). For example, the PLMN selecting unit 1128 determines whether the network corresponding to the public land mobile network that has been detected by the cell search coincides with the network that has been set by the user as the network to be preferentially selected.

When it is determined that the network corresponding to the public land mobile network that has been detected by the cell search coincides with the network that has been set by the user as the network to be preferentially selected (step S1018: YES), the mobile station 100 selects the public land mobile network corresponding to the preferentially selected network. For example, when the PLMN selecting unit 1128 determines that the network corresponding to the public land mobile network that has been detected by the cell search coincides with the network that has been set by the user as the network to be preferentially selected, the PLMN selecting unit 1128 selects the public land mobile network corresponding to the preferentially selected network.

The mobile station 100 selects a cell of the public land mobile network (S1012) that has been selected at step S1018. For example, the mobile station 100 detects a candidate of an available cell from the broadcast information of the public land mobile network that has been selected at step S1018.

The mobile station 100 performs location registration (step S1014) by using the cell that has been detected at step S1012.

On the other hand, when it is determined that the network corresponding to the public land mobile network that has been detected by the cell search does not coincide with the network that has been set by the user as the network to be preferentially selected (step S1018: NO), the mobile station 100 determines whether the public land mobile network that has been detected by the cell search at step S1004 coincides with the network that has been set by the operator as the network to be preferentially selected (step S1020). For example, the PLMN selecting unit 1128 determines whether the network corresponding to the public land mobile network detected by the cell search coincides with the network that has been set by the operator as the network to be preferentially selected.

When it is determined that the network corresponding to the public land mobile network that has been detected by the cell search coincides with the network that has been set by the operator as the network to be preferentially selected (step S1020: YES), the mobile station 100 selects the detected network corresponding to the public land mobile network. For example, when the PLMN selecting unit 1128 determines that the network corresponding to the public land mobile network that has been detected by the cell search coincides with the network that has been set by the operator as the network to be preferentially selected, the PLMN selecting unit 1128 selects the detected network corresponding to the public land mobile network.

The mobile station 100 selects a cell of the public land mobile network (step S1012) that has been selected at step S1020. For example, the mobile station 100 detects a candidate of an available cell from the broadcast information of the public land mobile network that has been selected at step S1020.

The mobile station 100 performs location registration (step S1014) by using the cell that has been detected at step S1012.

On the other hand, when it is determined that the public land mobile network that has been detected by the cell search does not coincide with the network that has been set by the operator as the network to be preferentially selected (step S1020: NO), the mobile station 100 determines whether the public land mobile network that has been detected by the cell search at step S1004 coincides with the network that has been set as the network to be preferentially selected (step S1022). Here, the network that has been set as the network to be preferentially selected is the network that has been set at step S1008. In other words, it is the second priority PLMN. For example, the PLMN selecting unit 1128 determines whether the network corresponding to the public land mobile network that has been detected by the cell search coincides with the network that has been set as the network to be preferentially selected. For example, the PLMN selecting unit 1128 determines whether the network corresponding to the public land mobile network that has been detected by the cell search coincides with the network that has been set as the network to be preferentially selected.

When it is determined that the network corresponding to the public land mobile network that has been detected by the cell search coincides with the network that has been set as the network to be preferentially selected (step S1022: YES), the mobile station 100 selects the detected network corresponding to the public land mobile network. For example, when the PLMN selecting unit 1128 determines that the network corresponding to the public land mobile network that has been detected by the cell search coincides with the network that has been set as the network to be preferentially selected, the PLMN selecting unit 1128 selects the detected network corresponding to the public land mobile network.

The mobile station 100 selects a cell of the network corresponding to the public land mobile network (step S1012) that has been selected at step S1022. For example, the mobile station 100 detects a candidate of an available cell from the broadcast information of the public land mobile network that has been selected at step S1022.

The mobile station 100 performs location registration (step S1014) by using the cell that has been detected at step S1012.

On the other hand, when it is determined that the public land mobile network that has been detected by the cell search does not coincide with the network that has been set by the operator as the network to be preferentially selected (step S1022: NO), the mobile station 100 determines whether the public land mobile network that has been detected by the cell search at step S1004 includes a network whose electric field strength is greater than or equal to a predetermined value (step S1024). Here, when there are plural networks whose electric field strengths are greater than or equal to the predetermined value, the network may be selected randomly, or the network may be selected in the descending order of the electric field strengths. For example, the PLMN selecting unit 1128 determines whether the networks of the public land mobile network that has been detected by the cell search include the network whose electric field strength is greater than or equal to the predefined value (step S1024).

When it is determined that the networks of the public land mobile network that has been detected by the cell search include the network whose electric field strength is greater than or equal to the predefined value (step S1030: YES), the mobile station 100 selects the network whose electric field strength is greater than or equal to the predefined value. For example, when the PLMN selecting unit 1128 determines that the networks of the public land mobile network that has been detected by the cell search include the network whose electric field strength is greater than or equal to the predefined value, the PLMN selecting unit 1128 selects the public land mobile network corresponding to the network whose electric field strength is greater than or equal to the predefined value.

The mobile station 100 selects a cell of the public land mobile network (step S1012) that has been selected at step S1024. For example, the mobile station 100 detects a candidate of an available cell from the broadcast information of the public land mobile network that has been selected at step S1024.

The mobile station 100 performs location registration by using the cell that has been detected at step S1012 (step S1014).

On the other hand, when it is determined that the public land mobile network that has been detected by the cell search does not include any network whose electric field strength is greater than or equal to the predefined value (step S1024: NO), the mobile station 100 selects the public land mobile network corresponding to the network that has been detected by the cell search of the step S1004. For example, when it is determined that the public land mobile network that has been detected by the cell search does not include any network whose electric field strength is greater than or equal to the predefined value, the PLMN selecting unit 1128 selects the public land mobile network corresponding to the network whose electric field strength is less than the predefined value. The mobile station 100 selects a cell from the selected public land mobile network (step S1012). For example, the mobile station 100 detects a candidate of an available cell from the broadcast information of the selected public land mobile network.

The mobile station 100 performs location registration by using the cell that has been detected at step S1012 (step S1014).

When it is determined, at step S1006, that the mobile country code that has been stored in the USIM card is identical to the mobile country code included in the broadcast channel (step S1006: NO), the mobile station 100 does not set a network to be preferentially selected (step S1026). Since the network to be preferentially selected has not been set, the processes of the above-described steps S1010-S1020, and 51024 are performed in accordance with the information of the network stored in the USIM.

### <Operations for a case where coverage is lost>

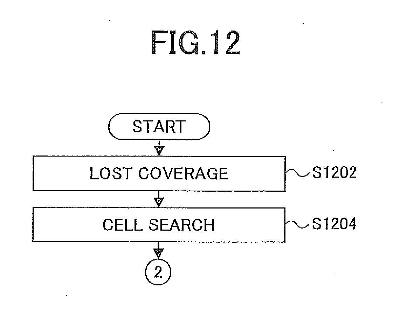

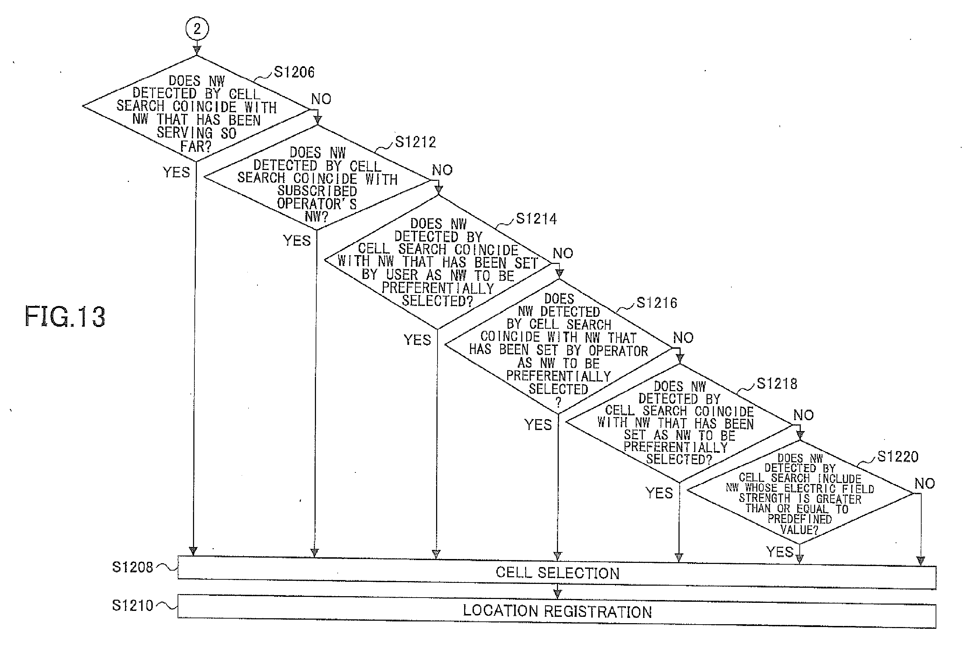

FIGS. 12 and 13 are a flowchart showing an example of operations of the mobile station 100. FIGS. 12 and 13 show a location registration flow for a case where coverage is lost. In the example shown in FIGS. 12 and 13, when the power supply is turned on, the second priority PLMN has been set.

The mobile station 100 loses the coverage (step S1202). In other words, the mobile station 100 is in a state in which the radio wave from the base station is not received.

The mobile station 100 performs a cell search (step S1204).

The mobile station 100 determines whether the public land mobile network that has been detected by the cell search at step S1104 coincides with the network which has been serving so far (S1206). For example, the PLMN selecting unit 1128 determines whether the public land mobile network that has been detected by the cell search coincides with the network which has been serving so far.

When it is determined that the network corresponding to the public land mobile network that has been detected by the cell search coincides with the network that has been serving so far (step S1206: YES), the mobile station 100 selects the public land mobile network corresponding to the serving network. For example, when the PLMN selecting unit 1128 determines that the network corresponding to the public land mobile network that has been detected by the cell search coincides with the network that has been serving so far, the PLMN selecting unit 1128 selects the public land mobile network corresponding to the serving network.

The mobile station 100 selects a cell of the public land mobile network (step S1208) that has been selected at step S1206. For example, the mobile station 100 detects a candidate of an available cell from the broadcast information of the public land mobile network that has been selected at step S1206.

The mobile station 100 performs location registration by using the cell that has been detected at step S1208 (step S1210).

On the other hand, when it is determined that the network corresponding to the public land mobile network that has been detected by the cell search does not coincide with the network that has been serving so far (step S1206: NO), the mobile station 100 determines whether the network corresponding to the public land mobile network that has been detected by the cell search at step S1204 coincides with the subscribed operator's network (step S1212). For example, the PLMN selecting unit 1128 determines whether the network corresponding to the public land mobile network that has been detected by the cell search coincides with the subscribed operator's network.

When it is determined that the network corresponding to the public land mobile network that has been detected by the cell search coincides with the subscribed operator's network (step S1212: YES), the mobile station 100 selects the public land mobile network corresponding to the subscribed operator's network. For example, when the PLMN selecting unit 1128 determines that the network corresponding to the public land mobile network that has been detected by the cell search coincides with the subscribed operator's network, the PLMN selecting unit 1128 selects the coincided public land mobile network.

The mobile station 100 selects a cell of the public land mobile network that has been selected at step S1212 (step S1208). For example, the mobile station 100 detects a candidate of an available cell from the broadcast information of the public land mobile network that has been selected at step S1212.

The mobile station 100 performs location registration by using the cell that has been detected at step S1208 (step S1210).

On the other hand, when it is determined that the network corresponding to the public land mobile network that has been detected by the cell search does not coincide with the subscribed operator's network (step S1212: NO), the mobile station 100 determines whether the network corresponding to the public land mobile network that has been detected by the cell search at step S1204 coincides with the network that has been set by the user as the network to be preferentially selected (step S1214). For example, the PLMN selecting unit 1128 determines whether the network corresponding to the public land mobile network that has been detected by the cell search coincides with the network that has been set by the user as the network to be preferentially selected.

When it is determined that the network corresponding to the public land mobile network that has been detected by the cell search coincides with the network that has been set by the user as the network to be preferentially selected (step S1214: YES), the mobile station 100 selects the public land mobile network corresponding to the detected network-For example, when it is determined that the network corresponding to the public land mobile network that has been detected by the cell search coincides with the network that has been set by the user as the network to be preferentially selected, the PLMN selecting unit 1128 selects the public land mobile network corresponding to the detected network.

The mobile station 100 selects a cell of the public land mobile network that has been selected at step S1214 (step S1208). For example, the mobile station 100 detects a candidate of an available cell from the broadcast information of the public land mobile network that has been selected at step S1214.

The mobile station 100 performs location registration by using the cell that has been detected at step S1208 (step S1210).

On the other hand, when it is determined that the network corresponding to the public land mobile network that has been detected by the cell search does not coincide with the network that has been set by the user as the network to be preferentially selected (step S1214: NO), the mobile station 100 determines whether the network corresponding to the public land mobile network that has been detected by the cell search at step S1204 coincides with the network that has been set by the operator as the network to be preferentially connected (step S1216). For example, the PLMN selection unit 1128 determines whether the network corresponding to the public land mobile network that has been detected by the cell search coincides with the network that has been set by the operator as the network to be preferentially selected.

When it is determined that the network corresponding to the public land mobile network that has been detected by the cell search coincides with the network that has been set by the operator as the network to be preferentially selected (step S1216: YES), the mobile station 100 selects the detected network corresponding to the public land mobile network. For example, when it is determined that the network corresponding to the public land mobile network that has been detected by the cell search coincides with the network that has been set by the operator as the network to be preferentially selected, the PLMN selecting unit 1128 selects the detected network corresponding to the public land mobile network.

The mobile station 100 selects a cell of the network corresponding to the public land mobile network that has been selected by the step S1216 (step S1208). For example, the mobile station 100 detects a candidate of an available cell from the broadcast information of the public land mobile network that has been selected at step S1208.

The mobile station 100 performs location registration by using the cell that has been detected at step S1208 (step S1210).

On the other hand, when it is determined that the network corresponding to the public land mobile network that has been detected by the cell search does not coincide with the network that has been set by the operator as the network to be preferentially selected (step S1216: NO), the mobile station 100 determines whether the network corresponding to the public land mobile network that has been detected by the cell search at step S1204 coincides with the network that has been set as the network to be preferentially connected (step S1218). Here, the network to be preferentially connected is the network that has been set at step S1008 of FIG. 10. In other words, it is the second priority PLMN. For example, the PLMN selecting unit 1128 determines whether the network corresponding to the public land mobile network that has been detected by the cell search coincides with the network that has been set as the network to be preferentially selected. For example, the PLMN selecting unit 1128 determines whether the network corresponding to the public land mobile network that has been detected by the cell search coincides with the network that has been set as the network to be preferentially selected.

When it is determined that the network corresponding to the public land mobile network that has been detected by the cell search coincides with the network that has been set as the network to be preferentially selected (step S1218: YES), the mobile station 100 selects the public land mobile network corresponding to the detected network. For example, when the PLMN selecting unit 1128 determines that the network corresponding to the public land mobile network that has been detected by the cell search coincides with the network that has been set as the network to be preferentially selected, the PLMN selecting unit 1128 selects the public land mobile network corresponding to the detected network.

The mobile station 100 selects a cell of the public land mobile network that has been selected by the step S1218 (step S1208). For example, the mobile station 100 detects a candidate of an available cell from the broadcast information of the public land mobile network that has been selected at step S1218.

The mobile station 100 performs location registration by using the cell that has been detected at step S1208 (step S1210).

On the other hand, when it is determined that the network corresponding to the public land mobile network that has been detected by the cell search does not coincide with the network that has been set as the network to be preferentially selected (step S1218: NO), the mobile station 100 determines whether the network corresponding to the public land mobile network that has been detected by the cell search at step S1204 includes a network whose electric field strength is greater than or equal to the predefined value (step S1220). Here, when there are plural networks whose electric field strengths are greater than or equal to the predefined value, the network may be randomly selected, or the network may be selected in the descending order of the electric field strength. For example, the PLMN selecting unit 1128 determines whether the public land mobile network that has been detected by the cell search includes a network whose electric field strength is greater than or equal to the predefined value.

When it is determined that the public land mobile network that has been detected by the cell search includes the network whose electric field strength is greater than or equal to the predefined value (step S1220: YES), the mobile station 100 selects the network whose electric field strength is greater than or equal to the predefined value. For example, when it is determined that the public land mobile network that has been detected by the cell search includes the network whose electric field strength is greater than or equal to the predefined value, the PLMN selecting unit 1128 selects the public land mobile network whose electric field strength is greater than or equal to the predefined value.

The mobile station 100 selects a cell of the public land mobile network that has been selected at step S1220 (step S1208). For example, the mobile station 100 detects a candidate of an available cell from the broadcast information of the public land mobile network that has been selected at step S1208.

The mobile station 100 performs location registration by using the cell that has been detected at step S1208 (step S1210).

On the other hand, when it is determined that the public land mobile network that has been detected by the cell search does not include any network whose electric field strength is greater than or equal to the predefined value (step S1220: NO), the mobile station 100 selects the public land mobile network that has been detected by the cell search at step S1204. For example, when it is determined that the public land mobile network that has been detected by the cell search does not include any network whose electric field strength is greater than or equal to the predefined value, the PLMN selecting unit 1128 selects the public land mobile network corresponding to the network whose electric field strength is less than the predefined value. The mobile station 100 selects a cell of the public land mobile network that has been selected (step S1208). For example, the mobile station 100 detects a candidate of an available cell from the broadcast information of the public land mobile network that has been detected by the cell search at step S1204.

The mobile station 100 performs location registration using the cell that has been detected at step S1208 (step S1210).

### <Timing of switching PLMN>

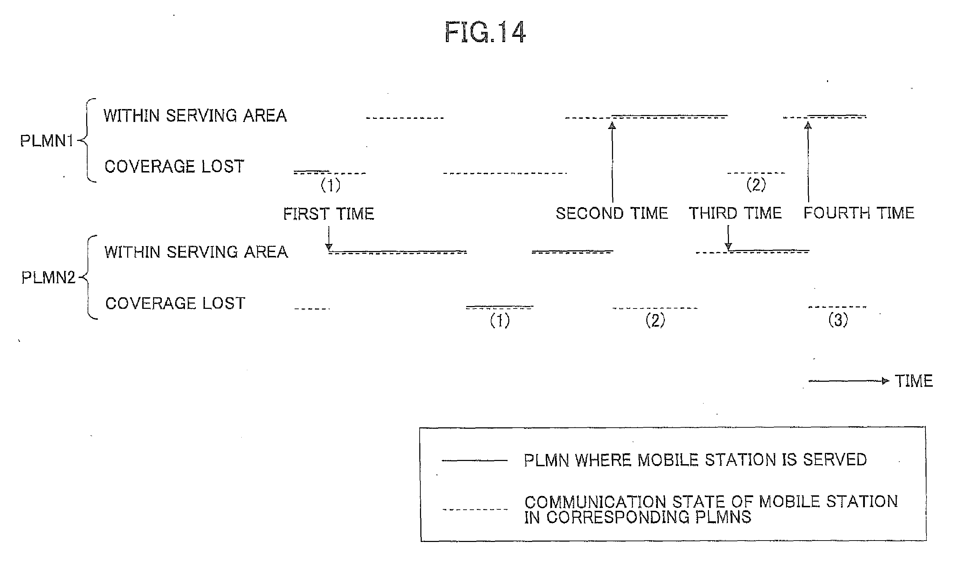

FIG. 14 shows the timing of switching the public land mobile network for the mobile station 100. In FIG. 14, each of the solid lines indicates the PLMN where the mobile station 100 has been served, while each of the dashed lines indicates a communication state of the mobile station 100 in the corresponding PLMN. The communication states include a state where the mobile station 100 is within the serving area and a state where the mobile station 100 loses coverage.

The mobile station 100 is connected to a PLMN 1. When the mobile station 100 loses coverage of the PLMN 1 (1), the mobile station 100 selects a PLMN in accordance with the flow shown in FIGS. 12 and 13. As a result of the selection, the mobile station 100 is connected to a PLMN 2. That is because the mobile station 100 is served in the PLMN 2. Here, switching of the PLMN is performed (first time). The PLMN 1 and PLMN 2 have different mobile network codes.

When the mobile station 100 being connected to the PLMN 2 loses coverage (1), the mobile station 100 selects a PLMN in accordance with the flow shown in FIGS. 12 and 13. As a result of the selection, since the coverage has also been lost in the PLMN 1, the switching of the PLMN is not performed. Subsequently, the mobile station 100 is served. When the mobile station 100 being connected to the PLMN 2 loses the coverage (2), the mobile station 100 selects a PLMN in accordance with the flow shown in FIGS. 12 and 13- As a result of the selection, the mobile station 100 is connected to the PLMN 1. Here, the switching of the PLMN is performed (second time). That is because the mobile station 100 is served in the PLMN 1.

When the mobile station 100 being connected to the PLMN 1 loses the coverage (2), the mobile station 100 selects a PLMN in accordance with the flow shown in FIGS. 12 and 13. As a result of the selection, the mobile station 100 is connected to the PLMN 2. That is because the mobile station 100 is served in the PLMN 2- Here, the switching of the PLMN is performed (third time).

When the mobile station 100 being connected to the PLMN 2 loses the coverage (3), the mobile station 100 selects a PLMN in accordance with the flow shown in FIGS. 12 and 13. As a result of the selection, the mobile station 100 is connected to the PLMN 1 (third time). That is because the mobile station 100 is served in the PLMN 1. Here, the switching of the PLMN is performed (fourth time).

According to FIG. 14, the number of times of losing the coverage in the PLMN 1 is twice, and the number of times of losing the coverage in the PLMN 2 is three times.

As shown in FIG. 14, the mobile station 100 can be connected to a PLMN having better quality. Here, the quality includes communication quality.

In the embodiment, when counting the number of times of losing the coverage, the number of times of losing the coverage may be counted for each of the mobile network codes. In this case, a PLMN that has not been selected may be excluded from the counting. Further, instead of the number of times of losing the coverage, the probability of losing the coverage may be used. For example, the number of times of losing the coverage/the number of times that the mobile station 100 is served may be used.

### <Modified example>

In the above-described embodiment, the number of times becomes large for the network of an operator that has been used for a long time. Therefore, if only the numbers of times are compared, an optimum PLMN may not be selected- For selecting the optimum PLMN, statistics may be used.

For example, an average value of the time that is spent until being served may be used, analogous to the concept of the mean time between failure (MTBF: Mean Time Between Failure).

Further, for example, an average value of the time during which the coverage has been lost may be used, analogous to the concept of the mean time to repair (MTTR: Mean Time To Repair).

According to the embodiment, when the setting of the network is automatic, an operator of good quality can be selected during international roaming.

According to the embodiment, there is provided a mobile station.

The mobile station includes
an information collecting unit that collects, for each of public land mobile networks, public land mobile network selecting information to be used for selecting a first public land mobile network to be preferentially selected; and
a storing unit that stores, for each of the public land mobile networks, the public land mobile network selecting information collected by the information collecting unit.

In a country other than a contracted country, it is possible to collect the information for connecting to a network of good quality. The quality includes communication quality.

Further, it includes a priority PLMN selecting unit that selects the first public land mobile network to be preferentially selected based on the public land mobile network selecting information stored in the storing unit; and a PLMN selecting unit that selects a second public land mobile network to which the mobile station is to be connected, wherein the PLMN selecting unit determines whether the second public land mobile network to which the mobile station is to be connected is set to be the first public land mobile network to be preferentially selected, by determining whether the second public land mobile network detected by a cell search coincides with the first public land mobile network to be preferentially connected that has been selected by the priority PLMN selecting unit.

During international roaming, it is possible to select an operator of good quality.

Further, the information collecting unit collects a number of times of losing coverage as the public land mobile network selecting information, and the priority PLMN selecting unit sets a public land mobile network as the first public land mobile network to be preferentially selected in an ascending order of the number of times of losing the coverage.

It is possible to select an operator of good quality based on the number of times of losing the coverage.

Further, the information collecting unit collects a number of times of disconnection as the public land mobile network selecting information, and the priority PLMN selecting unit sets a public land mobile network as the first public land mobile network to be preferentially selected in an ascending order of the number of times of the disconnection.

It is possible to select an operator of good quality based on the number of times of the disconnection.

Further, the information collecting unit collects a number of times of reconnection as the public land mobile network selecting information, and the priority PLMN selecting unit sets a public land mobile network as the first public land mobile network to be preferentially selected in an ascending order of the number of times of the reconnection.

It is possible to select an operator of good quality based on the number of times of the reconnection.

Further, the information collecting unit collects a throughput as the public land mobile network selecting information, and the priority PLMN selecting unit sets a public land mobile network as the first public land mobile network to be preferentially selected in a descending order of the throughput.

It is possible to select an operator of good quality based on the throughput.

Further, the information collecting unit collects a number of times that a user has selected, and the priority PLMN selecting unit sets a public land mobile network as the first public land mobile network to be preferentially selected in a descending order of the number of times that the user has selected the public land mobile network.

It is possible to select an operator of good quality based on the number of times that the user has selected.

Further, it includes a mobile country code determination unit that determines whether a first mobile country code to be stored in the mobile station coincides with a second mobile country code included in broadcast information to be received by the mobile station, wherein, when the mobile country code determination unit has determined that the first mobile country code does not coincide with the second mobile country code, the information collecting unit collects, for each of the public land mobile networks, the public land mobile network selecting information to be used for selecting the first public land mobile network to be preferentially selected.

It is possible to collect the information for connecting to the network of good quality in the country other then the contracted country.

According to the embodiment, there is provided a method of a mobile station.

The method includes an information collecting step of collecting, for each of public land mobile networks, public land mobile selecting information to be used for selecting a first public land mobile network to be preferentially selected, and a storing step of storing, for each of the public land mobile networks, the public land mobile network selecting information collected by the information collecting step.

For the convenience of explanation, specific examples of numerical values have been used in order to facilitate understanding of the invention. However, these numerical values are simply illustrative, and any other appropriate values may be used, except as indicated otherwise.

In the above, the explanation has been provided while referring to specific embodiments, but the embodiments are merely illustrative, and variations, modifications, alterations and substitutions could be conceived by those skilled in the art. For the convenience of explanation, the devices according to the embodiments of the present invention have been explained by using functional block diagrams. However, these devices may be implemented in hardware, software, or combinations thereof- The present invention is not limited to the above-described embodiments, and various variations, modifications, alterations, substitutions and so on are included, without departing from the spirit of the present invention.

The present international application claims priority based on Japanese Patent Application No. 2010-107334, filed on May 7, 2010, the entire contents of which are hereby incorporated by reference.

### LIST OF REFERENCE SYMBOLS

- 100:: Mobile station
- 102:: Input unit
- 104:: Output unit
- 106:: Communication controller
- 108:: Radio unit
- 110:: Storing unit
- 112:: Central processing unit (CPU: Central Processing Unit)
- 1122:: Mobile county code determination unit
- 1124:: Information collecting unit
- 1126:: Priority PLMN selecting unit
- 1128:: PLMN selecting unit
- 200ₘ: (m is an integer such that m>0): Base station

## Claims

1. A mobile station comprising:
an information collecting unit that collects, for each of public land mobile networks, public land mobile network selecting information to be used for selecting a first public land mobile network to be preferentially selected; and
a storing unit that stores, for each of the public land mobile networks, the public land mobile network selecting information collected by the information collecting unit.

2. The mobile station according to claim 1, further comprising:
a priority PLMN selecting unit that selects the first public land mobile network to be preferentially selected based on the public land mobile network selecting information stored in the storing unit; and
a PLMN selecting unit that selects a second public land mobile network to which the mobile station is to be connected,
wherein the PLMN selecting unit determines whether the second public land mobile network to which the mobile station is to be connected is set to be the first public land mobile network to be preferentially selected, by determining whether the second public land mobile network detected by a cell search coincides with the first public land mobile network to be preferentially connected that has been selected by the priority PLMN selecting unit.

3. The mobile station according to claim 2,
wherein the information collecting unit collects a number of times of losing coverage as the public land mobile network selecting information, and
wherein the priority PLMN selecting unit sets a public land mobile network as the first public land mobile network to be preferentially selected in an ascending order of the number of times of losing the coverage.

4. The mobile station according to claim 2,
wherein the information collecting unit collects a number of times of disconnection as the public land mobile network selecting information, and
wherein the priority PLMN selecting unit sets a public land mobile network as the first public land mobile network to be preferentially selected in an ascending order of the number of times of the disconnection.

5. The mobile station according to claim 2,
wherein the information collecting unit collects a number of times of reconnection as the public land mobile network selecting information, and
wherein the priority PLMN selecting unit sets a public land mobile network as the first public land mobile network to be preferentially selected in an ascending order of the number of times of the reconnection.

6. The mobile station according to claim 2,
wherein the information collecting unit collects a throughput as the public land mobile network selecting information, and
wherein the priority PLMN selecting unit sets a public land mobile network as the first public land mobile network to be preferentially selected in a descending order of the throughput.

7. The mobile station according to claim 2,
wherein the information collecting unit collects a number of times that a user has selected, and
wherein the priority PLMN selecting unit sets a public land mobile network as the first public land mobile network to be preferentially selected in a descending order of the number of times that the user has selected the public land mobile network.

8. The mobile station according to claim 1, further comprising:
a mobile country code determination unit that determines whether a first mobile country code to be stored in the mobile station coincides with a second mobile country code included in broadcast information to be received by the mobile station,
wherein, when the mobile country code determination unit has determined that the first mobile country code does not coincide with the second mobile country code, the information collecting unit collects, for each of the public land mobile networks, the public land mobile network selecting information to be used for selecting the first public land mobile network to be preferentially selected.

9. A method of a mobile station comprising:
an information collecting step of collecting, for each of public land mobile networks, public land mobile network selecting information to be used for selecting a first public land mobile network to be preferentially selected; and
a storing step of storing, for each of the public land mobile networks, the public land mobile network selecting information collected by the information collecting step.
